(19) Europäisches Patentamt
European Patent Office
Office européen des brevets

(11) **EP 1 806 863 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(51) Int Cl.:
***H04J 14/00*** *(2006.01)*

(21) Anmeldenummer: **06290065.9**

(22) Anmeldetag: **10.01.2006**

(54) **Interkanal-Zeit-Codierungsverfahren für mehrkanalige Übertragungssysteme**

Method of interchannel time coding for multichannel transmission systems

Procédé de codage intercanal temporel pour système de transmission multicanaux

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**11.07.2007 Patentblatt 2007/28**

(73) Patentinhaber: **Alcatel Lucent**
**75008 Paris (FR)**

(72) Erfinder:
• **Schaich, Frank**
**70374 Stuttgart (DE)**
• **Speidel, Joachim**
**71067 Sindelfingen (DE)**

(74) Vertreter: **Schmidt, Werner Karl et al**
**Alcatel Lucent**
**Intellectual Property & Standards**
**70430 Stuttgart (DE)**

(56) Entgegenhaltungen:
• **SANGIN KIM ET AL: "A New Family of Space/ Wavelength/Time Spread Three-Dimensional Optical Code for OCDMA Networks" JOURNAL OF LIGHTWAVE TECHNOLOGY, XX, XX, Bd. 18, Nr. 4, April 2000 (2000-04), XP011029688 ISSN: 0733-8724**
• **PATIL A ET AL: "Performance Assessment of Optical CDMA Systems based on Wavelength-Time Codes from Balanced Incomplete Block Designs" TELECOMMUNICATIONS IN MODERN SATELLITE, CABLE AND BROADCASTING SERVICES, 2005. 7TH INTERNATIONAL CONFERENCE ON NIS, SERBIA AND MONTENEGRO 28-30 SEPT. 2005, PISCATAWAY, NJ, USA, IEEE, 28. September 2005 (2005-09-28), Seiten 295-298, XP010874624 ISBN: 0-7803-9164-0**
• **SHIVALEELA E S ET AL: "Design of a New Family of Two-Dimensional Codes for Fiber-Optic CDMA Networks" JOURNAL OF LIGHTWAVE TECHNOLOGY, XX, XX, Bd. 16, Nr. 4, April 1998 (1998-04), XP011029098 ISSN: 0733-8724**
• **CHOVAN JOZEF ET AL: "MULTIPLE-ACCESS INTERFERENCE IN 2-D WAVELENGTH/TIME OPTICAL CDMA SYSTEM WITH OPTICAL HARD-LIMITERS" PROCEEDINGS OF THE SPIE, SPIE, BELLINGHAM, VA, US, Bd. 5945, 2005, Seiten 1-8, XP009084207 ISSN: 0277-786X**

**Beschreibung**

Technisches Gebiet:

Die Erfindung betrifft ein Codierverfahren für mehrkanalige, insbesondere optische Übertragungssysteme, bei dem eine Codierung sowohl in Zeitrichtung, als auch über mehrere Kanäle hinweg erfolgt, gemäß dem Oberbegriff des Anspruchs 1.

Stand der Technik:

Interkanal-Zeit-Codierung, auch als Wavelength-Time-Codierung (WTC) bezeichnet, ist ein Codierverfahren, mit dem mehrkanalige optische Übertragungssysteme mit starker Interkanalbeeinflussung (Interchannel Interference, ICI) ein robusteres Übertragungsverhalten erhalten. Mehrkanalige, optische Übertragungssysteme sind auch unter den Bezeichnungen Photonische Netze, Wellenlängenmultiplex Systeme und Wavelength Division Multiplexed Optical Systems (WDM) bekannt.

Bei der Interkanal-Zeit-Codierung findet eine Codierung nicht nur in Zeitrichtung, sondern zusätzlich über mehrere Kanäle hinweg statt. Für die Codierung werden dabei die Bits der beteiligten Kanäle herangezogen.

Aus US 6,313,932 B1 und US 6,522,436 B2 ist ein Codierverfahren für mehrkanalige, optische Übertragungssysteme bekannt, bei dem ein Fehlerkorrekturverfahren auf die in den Kanälen übertragenen Daten angewandt wird, welches sowohl eine Interkanal-Codierung, als auch eine Zeit-Codierung umfasst. Die Codierung erfolgt dabei mittels eines Hamming-Code-Schemas.

Darüber hinaus ist aus US 6,313,932 B1 und US 6,522,436 B2 bekannt, bei einem sowohl Interkanal-Codierung, als auch Zeit-Codierung umfassenden Codierverfahren die Zeit-Codierung durch Verschränken (Interleaving) robuster zu machen.

Interleaving wird hauptsächlich angewendet, um die Datenübertragung vor sogenannten Burstfehlern abzusichern. Dabei wird die Eigenschaft dieser Fehler ausgenutzt, dass sie zwar, wenn sie auftreten, eine größere Anzahl zusammenhängender Bits zerstören, dafür aber relativ selten sind. Zu allen Daten werden unabhängig vom Interleaving zusätzliche Fehlerkorrekturinformationen mit übertragen, mit denen Einzelbitfehler korrigiert werden können. Tritt nun ein Burstfehler auf, der nicht nur ein Bit sondern eine Gruppe von Bits verändert, kann diese Menge kann nicht mehr korrigiert werden. Durch das Interleaving wird aus dem Burstfehler künstlich eine größere Menge Einzelbitfehler erzeugt, indem die zu übertragenden Daten bitweise in die Länge gezogen werden, und dafür mehrere unabhängige Daten parallel übertragen werden.

Nachteilig an diesem Verfahren ist, dass der Sender die zu übertragenden Daten erst in die interleavte Form bringen muss. Dazu müssen aber alle Daten, die ineinander verschachtelt werden sollen vorliegen. Ein Datenblock kann erst dann gesendet werden, wenn der Datenblock vollständig im Sendepuffer angekommen ist. Entsprechend kann der Empfänger die Daten erst dann wieder in die richtige Reihenfolge bringen, wenn das Paket komplett angekommen ist. Dadurch tritt eine Verzögerung in der Größenordnung von etwa der doppelten Übertragungsdauer eines Datenpakets auf.

Aus US 5,710,797 ist ein Verfahren bekannt, welches einen verringerten Kanalabstand in digitalen Kommunikationssystemen ermöglicht. Das Verfahren erlaubt die gleichzeitige Datenübertragung in einander überlappenden Kanälen durch Verwendung eines Demodulators, der in der Lage ist, Daten Bits eines gewünschten Signals in der Gegenwart von eng beabstandeten, anderen Signalen zu gewinnen. Der dadurch mögliche, engere Kanalabstand verbessert die Kapazität und damit die mögliche Anzahl von Benutzern je spezifischer Bandbreite von digitalen Kommunikationssystemen.

Die fortschreitende Entwicklung auf dem Gebiet der Telekommunikation, Nachrichten- und Datenübermittlung bedarf jedoch weiterer Verbesserungen, um die Betriebskosten optischer und/oder elektromagnetischer digitaler Übertragungssysteme zu senken und die möglichen Übertragungsraten weiter zu steigern.

Technische Aufgabe der Erfindung:

Der Erfindung liegt daher die Aufgabe zugrunde, ein Codierverfahren zu entwickeln, welches geringere Systemkosten ermöglicht.

Offenbarung der Erfindung und deren Vorteile:

Die Aufgabe wird bei einem Verfahren der eingangs genannten Gattung dadurch gelöst, dass für die Codierung ein Mapping gewählt wird, bei dem das gleichzeitige Auftreten von Bits mit einem Signalwert von '1' in benachbarten, miteinander codierten Kanälen ausgeschlossen wird.

Beim Mapping wird jedem möglichen zu übertragenden Bitmuster ein bestimmtes codiertes Bitmuster zugewiesen. Diese Zuweisungen liegen beispielsweise in Form einer Tabelle vor. Ein Codierer auf der Senderseite mappt dem zu übertragenden Bitmuster, welches die Sendefolgen der miteinander zu codierenden Kanäle umfasst, an seinem Eingang ein codiertes Bitmuster zu, welches die codierten Folgen der Sendefolgen umfasst, und gibt dieses aus. Das ausgegebene codierte Bitmuster C wird anschließend über eine Faserstrecke übertragen. Ein Decodierer auf der Empfängerseite weist dem codierten Bitmuster wieder das ursprüngliche Bitmuster zu.

Das erfindungsgemäße Codierverfahren weist gegenüber dem Stand der Technik den Vorteil auf, dass, da niemals gleichzeitig eine '1' in benachbarten, miteinander codierten Kanälen in die Faser eingekoppelt wird, die maximale Einkoppelleistung bei Codierung in Paaren auf die Hälfte sinkt. Dadurch werden die nichtlinearen Effekte der Faser reduziert. Bei einer Codierung zu Tripeln sinkt die maximale Einkoppelleistung ebenfalls, allerdings nicht so stark wie bei Paaren. Durch das erfindungsgemäße Codierverfahren wird das Signal-zu-Rausch Verhältnis (Optical Signal to Noise Ratio, OSNR) des optischen Übertragungssystems verbessert, wodurch die Bitfehlerrate (Bit Error Rate, BER) beim Empfänger verringert wird. Dadurch kann mittels des erfindungsgemäßen Interkanal-Zeit-Codierverfahrens bei gleich bleibender BER ein geringerer Kanalabstand und damit eine höhere spektrale Effizienz erreicht werden, oder die überbrückbare Streckenlänge erhöht werden, wodurch die Systemkosten sinken.

Beim erfindungsgemäßen Codierverfahren sind für das Mapping z.B. folgende drei unterschiedliche Optimierungsstrategien denkbar:

a) Maximierung der Hamming-Distanz,
b) Minimierung der Hamming-Gewichte, indem die Häufigkeit der '1' als Sendesymbol in den codierten Sendefolgen minimiert wird, um die ICI zusätzlich zu verringern,
c) Minimierung der Anzahl der '1 0' und '0 1' Bitmuster in Zeitrichtung um die durch ISI begrenzte innere Augenöffnung so groß wie möglich zu halten.

Eine vorteilhafte Ausgestaltung des erfindungsgemäßen Codierverfahrens sieht vor, dass bei der Decodierung alle möglichen Codewörter ausgewertet werden und das Codewort mit der maximalen Metrik ausgewählt wird.

Eine vorteilhafte Ausgestaltung des erfindungsgemäßen Codierverfahrens sieht vor, dass mittels eines Algorithmus die unwahrscheinlichsten Codewörter vor der eigentlichen Decodierung ausgeschlossen werden, so dass nicht alle Metriken ausgewertet werden müssen. Dadurch wird der nötige Aufwand für die Decodierung verringert.

Eine zusätzliche vorteilhafte Ausgestaltung des erfindungsgemäßen Codierverfahrens sieht vor, dass die Kanäle zu Paaren gruppiert werden, wobei die Codierung über die zu Paaren gruppierten Kanäle hinweg erfolgt.

Eine andere vorteilhafte Ausgestaltung des erfindungsgemäßen Codierverfahrens sieht vor, dass die Kanäle zu Tripeln gruppiert werden, wobei die Codierung über die zu Tripeln gruppierten Kanäle hinweg erfolgt. Eine Gruppierung der Kanäle zu Tripeln anstelle von zu Paaren erhöht die spektrale Effizienz, wobei die Decodierung immer noch mit vergleichsweise geringem Aufwand umsetzbar ist.

Eine besonders vorteilhafte Ausgestaltung des erfindungsgemäßen Codierverfahrens sieht vor, dass die Interkanal-Zeit-Codierung mit einer Reed-Solomon Codierung kombiniert wird.

Eine Ausgestaltung der Erfindung betrifft ein mehrkanaliges optisches Übertragungssystem nach Anspruch 11.

Eine vorteilhafte Ausgestaltung des erfindungsgemäßen mehrkanaligen optischen Übertragungssystems sieht vor, dass zur Decodierung ein Maximum-Likelihood Symbol-by-Symbol Decoder verwendet wird.

Eine andere vorteilhafte Ausgestaltung des erfindungsgemäßen mehrkanaligen optischen Übertragungssystems sieht vor, dass für die Decodierung ein Sphere-Decoder verwendet wird.

Eine besonders vorteilhafte Ausgestaltung des erfindungsgemäßen mehrkanaligen optischen Übertragungssystems umfasst zusätzliche Mittel zur Durchführung einer Reed-Solomon-Codierung.

Eine zusätzliche Ausgestaltung der Erfindung betrifft einen Codierer nach Anspruch 10, welcher Mittel zur Interkanal-Zeit-Codierung einer Mehrzahl von Sendefolgen zur Übertragung über Wellenlängenmultiplexkanäle umfasst, wobei die Mittel zur Interkanal-Zeit-Codierung zur Übertragung über Wellenlängenmultiplexkanäle Mittel zur Durchführung eines Mappings umfassen, bei dem jedem zu übertragenden Zeitmuster ein bestimmtes kodiertes Zeitmuster zugewiesen wird und bei dem das gleichzeitige Auftreten von Bits mit einem Signalwert von '1' in benachbarten, miteinander codierten Kanälen ausgeschlossen wird.

Kurzbeschreibung der Zeichnung, in der zeigen:

Fig. 1   Eine schematische Darstellung eines optischen Übertragungssystems mit Interkanal-Zeit-Codierung.
Fig. 2   eine schematische Darstellung der Kanalmuster von miteinander verglichenen, mehrkanaligen optischen Übertragungssystemen,
Fig. 3   ein Diagramm, welches die Bitfehlerrate (BER) von verschiedenen, miteinander verglichenen, mehrkanaligen optischen Übertragungssystemen über dem optischen Signal-zu-Rausch Verhältnis (OSNR) wiedergibt, sowie
Fig. 4   ein Diagramm, welches die Bitfehlerrate (BER) von verschiedenen, miteinander verglichenen, mehrkanaligen optischen Übertragungssystemen über dem optischen Signal-zu-Rausch Verhältnis (OSNR) unter Berücksichtigung der Intersymbol Interferenz (ISI) wiedergibt.

Wege zur Ausführung der Erfindung:

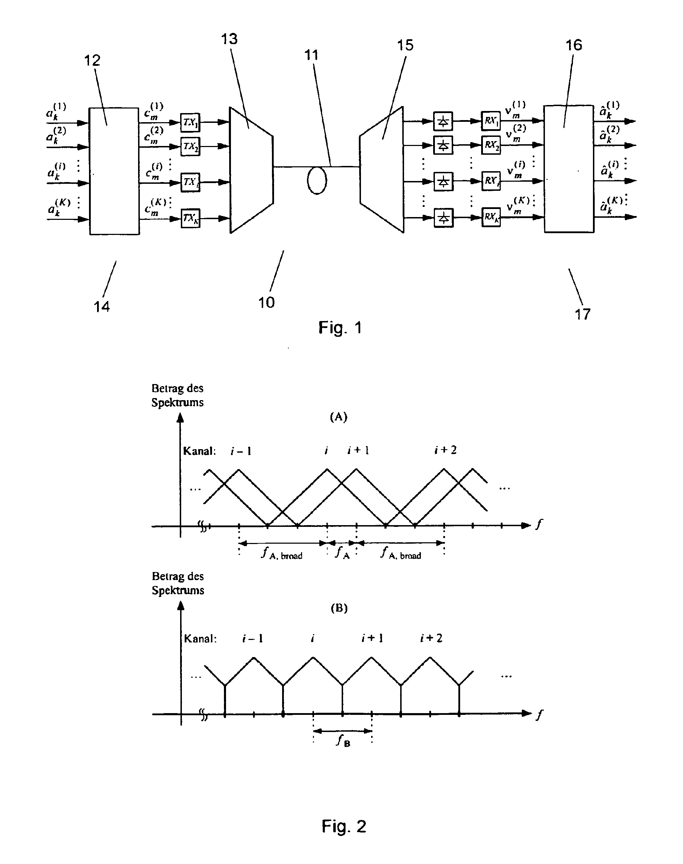

Eine in Fig. 1 dargestelltes optisches Übertragungssystem 10 mit Interkanal-Zeit-Codierung besteht im Wesentlichen aus einer vollkompensierten, optischen Übertragungsstrecke 11, einem Interkanal-Zeit-Codierer 12 und einem Multiplexer 13 auf der Sender- 14 und einem Demultiplexer 15 und einem Interkanal-Zeit-Decodierer 16 auf der Empfängerseite 17. Darüber hinaus sind in Fig. 1 auf der Senderseite 14 noch die Sender $TX_i$ und auf der Empfängerseite 17 die Empfänger $RX_i$ der jeweiligen Kanäle i vereinfacht dargestellt. Die Sender $TX_i$ umfassen dabei alle notwendigen Komponenten vom Impulsformer bis zum Modulator und die Empfänger $RX_i$ alle notwendigen Komponenten vom Empfangsfilter bis zum Abtaster.

Im Codierer bilden $N$ aufeinander folgende Bits von $M$ miteinander interkanalcodierten Kanälen die $MxN$ Eingangsmatrix des Codierers. Hierbei ist $M \leq K$ zu wählen, mit $K$ der Gesamtzahl der Kanäle des WDM-Systems. Der Codierer fügt Q Paritätsbits pro Kanal hinzu und gibt die $Mx(N+Q)$ Ausgangsmatrix mit den Elementen

$$c_{m-v}^{(i)}(v = 0,..., N + Q - 1; i = 1,...M; m \in Z) \text{ aus. } i$$ aus. i gibt hierbei die Kanalnummer an, m ist die diskrete Zeit. Um das Prinzip darzustellen wird im Folgenden M=2 gesetzt. Der Codierer führt dabei folgende Zuweisung aus:

$$\underbrace{\begin{pmatrix} a_{k-N+1}^{(1)}...a_k^{(1)} \\ a_{k-N+1}^{(2)}...a_k^{(2)} \end{pmatrix}}_{A} \rightarrow \underbrace{\begin{pmatrix} c_{m-N-Q+1}^{(1)}...c_m^{(1)} \\ c_{m-N-Q+1}^{(2)}...c_m^{(2)} \end{pmatrix}}_{C} \qquad (1)$$

Eine derartige Zuweisung wird als Mapping bezeichnet. Beim Mapping wird jedem möglichen zu übertragenden Bitmuster A ein bestimmtes codiertes Bitmuster C zugewiesen. Diese Zuweisungen liegen beispielsweise in Form einer Tabelle vor. Ein Codierer auf der Senderseite mappt dem zu übertragenden Bitmuster A, welches die Sendefolgen $\alpha^{(i)}{}_{k-N+1},...\alpha^{(i)}{}_k$ der miteinander codierten Kanäle i umfasst, an seinem Eingang ein codiertes Bitmuster C zu, welches die codierten Folgen $c^{(i)}{}_{m-N-Q+1}...c^{(i)}{}_m$ der Sendefolgen umfasst, und gibt dieses aus. Das ausgegebene codierte Bitmuster C wird anschließend über eine Faserstrecke übertragen. Ein Decodierer auf der Empfängerseite weist dem codierten Bitmuster C wieder das ursprüngliche Bitmuster A zu. Beim erfindungsgemäßen Interkanal-Zeit-Codierverfahren enthalten die codierten Bitmuster C in benachbarten Kanälen niemals gleichzeitig eine '1', da es ungünstig in Bezug auf die ICI und damit auf die Bitfehlerrate (Bit Error Rate, BER) ist, wenn in benachbarten Kanälen gleichzeitig eine '1' ankommt.

Die Bitrate der Sendefolge $\alpha_k^{(i)}$ sei $V=1/T$. Dann folgt für die codierte Folge $c_m^{(i)}$ eine Bitrate von $V'=1/T'$, wobei gelten muss: $TN=T'(N+Q)$. Es ergibt sich dann $T'=RT$ mit der Coderate $R=N/(N+Q)$. Ein mögliches Mapping für $N=1$ und $Q=1$ sieht wie folgt aus:

$$\begin{pmatrix} 0 \\ 0 \end{pmatrix} \rightarrow \begin{pmatrix} 0 & 0 \\ 0 & 0 \end{pmatrix}; \begin{pmatrix} 0 \\ 1 \end{pmatrix} \rightarrow \begin{pmatrix} 0 & 1 \\ 0 & 0 \end{pmatrix}; \begin{pmatrix} 1 \\ 0 \end{pmatrix} \rightarrow \begin{pmatrix} 1 & 0 \\ 0 & 0 \end{pmatrix}; \begin{pmatrix} 1 \\ 1 \end{pmatrix} \rightarrow \begin{pmatrix} 1 & 0 \\ 0 & 1 \end{pmatrix} \qquad (2)$$

Prinzipiell gibt es eine Vielzahl möglicher Mappings. Erfindungsgemäß ist jedoch vorgesehen, wie in (2) an einem vereinfachten Beispiel dargestellt, dass keine Codeworte auftreten, die in benachbarten Zeilen, entsprechend in benachbarten Kanälen eine '1' enthalten.

Zur Decodierung wird ein Maximum-Likelihood Symbol-by-Symbol Decoder verwendet. Der Decoder wertet die nachfolgende Gleichung (3) für alle möglichen Codeworte aus und wählt das mit der maximalen Metrik aus. Für das obige Beispiel mit M=2 sehen diese wie folgt aus:

$$p\left(v_{m-N-Q+1}^{(1)},...,v_m^{(1)},v_{m-N-Q+1}^{(2)},...,v_m^{(2)}\middle|c_{m-N-Q+1}^{(1)},...,c_m^{(1)},c_{m-N-Q+1}^{(2)},...,c_m^{(2)}\right)$$

$$= \prod_{n=-N-Q+1}^{0} q\left(v_{m+n}^{(1)}\middle|c_{m+n}^{(1)},c_{m+n}^{(2)}\right) \prod_{n=-N-Q+1}^{0} q\left(v_{m+n}^{(2)}\middle|c_{m+n}^{(1)},c_{m+n}^{(2)}\right) \tag{3}$$

Dabei wird von statistisch unabhängigem Rauschen ausgegangen. Tritt zusätzlich Intersymbol Interferenz (ISI) innerhalb der Kanäle auf und soll diese beim Entscheidungsprozess berücksichtigt werden, so muss der Decoder die nachfolgende Gleichung (4) auswerten:

$$p\left(v_{m-N-Q+1}^{(1)},...,v_m^{(1)},v_{m-N-Q+1}^{(2)},...,v_m^{(2)}\middle|c_{m-N-Q}^{(1)},...,c_{m+1}^{(1)},c_{m-N-Q}^{(2)},...,c_{m+1}^{(2)}\right)$$

$$= \prod_{n=-N-Q+1}^{0} q\left(v_{m+n}^{(1)}\middle|c_{m+n-1}^{(1)},c_{m+n}^{(1)},c_{m+n+1}^{(1)},c_{m+n-1}^{(2)},c_{m+n}^{(2)},c_{m+n+1}^{(2)}\right) \tag{4}$$

$$\cdot \prod_{n=-N-Q+1}^{0} q\left(v_{m+n}^{(2)}\middle|c_{m+n-1}^{(1)},c_{m+n}^{(1)},c_{m+n+1}^{(1)},c_{m+n-1}^{(2)},c_{m+n}^{(2)},c_{m+n+1}^{(2)}\right)$$

Hierbei sind $c^{(1)}_{m-N-Q}$ und $c^{(2)}_{m-N-Q}$ die letzten Bits des vorhergehenden, $c^{(1)}_{m+1}$ und $c^{(2)}_{m+1}$ die ersten des nachfolgenden Codeworts. Die ISI ist im Ausführungsbeispiel auf den realistischen Fall von nur zwei Samples beschränkt. q(.|.) ist die Wahrscheinlichkeitsdichtefunktion der verrauschten Empfangssymbole $v^{(1)}_{m+n}$ bzw. $v^{(2)}_{m+n}$.

Neben einem solchen soft-in-hard-out (SIHO) -Decoder ist auch ein hard-in-hard-out (HIHO) -Decoder denkbar. Hierbei wird statt der ML-Detektion eine Schwellwertentscheidung durchgeführt. Als Decodier-Kriterium wird die Hamming-Distanz des empfangenen Symbols zu allen möglichen verwendet. Das Symbol mit der minimalen Hamming-Distanz wird ausgewählt. Um die Vorteile beider beschriebenen Decodierer (HIHO: einfache Implementierung, SIHO: genauere Decodierung, robuster) zu vereinen, ist eine Kombination aus beiden möglich. Hierbei werden vor der eigentlichen ML-Decodierung die unwahrscheinlichsten Codeworte mittels eines Algorithmus ausgeschlossen, so dass nicht alle Metriken ausgewertet werden müssen.

Beim erfindungsgemäßen Codierverfahren wird die Bitfehlerrate im Wesentlichen dadurch verringert, dass keine Codeworte auftreten, die in benachbarten Zeilen, entsprechend in benachbarten Kanälen, eine '1' enthalten. Dieses Kriterium wird beispielsweise durch das in (2) dargestellte Mapping erfüllt. Bei diesem Mapping ist $N$=1 und $Q$=1. In diesem Fall besteht der Codewortraum aus $N_C=3^{(N+Q)}$ Elementen, während der Sendesymbolraum $N_A=4^N$ Symbole umfasst. Sofern wie im Ausführungsbeispiel die Bedingung $N_C \geq N_A$ erfüllt ist, stehen $N_C$-$N_A$ Freiheitsgrade für das weitere Codedesign zur Verfügung. Dabei sind z.B. folgende drei verschiedene Optimierungsstrategien denkbar:

a) Maximierung der Hamming-Distanz,
b) Minimierung der Hamming-Gewichte, indem die Häufigkeit der '1' als Sendesymbol in den codierten Sendefolgen minimiert wird, um die ICI zusätzlich zu verringern,
c) Minimierung der Anzahl der '1 0' und '0 1' Bitmuster in Zeitrichtung um die durch ISI begrenzte innere Augenöffnung so groß wie möglich zu halten.

Im Nachfolgenden werden zwei mehrkanalige optische Übertragungssysteme mit erfindungsgemäßer Interkanal-Zeit-Codierung und drei mehrkanalige optische Übertragungssysteme mit verschiedenen, konventionellen Codierverfahren verglichen.

Bei den Übertragungssystemen mit erfindungsgemäßer Interkanal-Zeit Codierung ist $N$=3 und $Q$=1 gewählt. $N$=3 und $Q$=1 stellen einen guten Kompromiss zwischen Performanz, Komplexität und Bitratenerhöhung dar. Die Wahrscheinlichkeitsdichtefunktionen q(.|.) (vgl. Gleichungen (3) und (4)) der Metriken sind für das Ausführungsbeispiel mit N=3 und Q=1 chi$^2$-Verteilungen. Andere Wahrscheinlichkeitsdichtefunktionen, wie beispielsweise eine Gauss-Verteilung wären ebenso denkbar. Für $N$=3 und $Q$=1 ergibt sich für die Coderate R=3/4 und ein Overhead von 33%. Da die Komplexität des Codierers und des Decodierers mit steigender Anzahl M der miteinander interkanalcodierten Kanälen wächst, ist bei den Übertragungssystemen mit erfindungsgemäßer Interkanal-Zeit Codierung darüber hinaus $M$=2 gewählt, das heißt die Kanäle werden paarweise mit einer Interkanal-Zeit-Codierung versehen. $M$=2 ist sinnvoll in Verbindung mit mehrkanaligen optischen Übertragungssystemen mit einer Gesamtkanalzahl K>2. Eine Lösung mit Tripeln anstelle von Paaren, also die Codierung von drei anstelle von zwei Kanälen miteinander, erhöht die spektrale Effizienz, wobei die Decodierung immer noch umsetzbar ist.

Für die Übertragungssysteme mit Interkanal-Zeit-Codierung wird vorzugsweise ein Kanalraster verwendet, wie es in Fig. 2(A) dargestellt ist. Bei dem in Fig. 2(A) dargestellten Kanalraster treten zwei unterschiedliche Kanalabstände auf. $f_A$ ist der Abstand zwischen den beiden miteinander codierten Kanälen, $f_{A,broad}$ ist der Abstand zwischen den Kanälen, die nicht miteinander codiert werden. Da die miteinander codierten Kanäle durch das erfindungsgemäße Mapping im Hinblick auf die ICI optimiert sind, können diese näher beieinander liegen, wodurch $f_{A,broad} > f_A$ ist. Weil $f_{A,broad} > f_A$ ist, ist bei einem solchen Kanalraster die ICI minimiert, da dadurch die Möglichkeit besteht die benachbarten Kanäle, die nicht miteinander codiert sind, weiter voneinander zu beabstanden.

Bei den Übertragungssystemen mit Interkanal-Zeit-Codierung und dem in Fig. 2(A) dargestellten Kanalraster findet eine breitbandige Filterung am Multiplexer zur Minimierung der ISI statt. Beim Kanalraster in Fig. 2(A) ist $f_A$=50GHz und $f_{A,broad}$=75GHz.

Die Vergleichssysteme ohne Interkanal-Zeit-Codierung weisen ein in Fig. 2(B) dargestelltes, konventionelles, gleichmäßiges Kanalraster auf. Bei dem in Fig. 2(B) dargestellten Kanalraster wird eine schmalbandige Filterung am Multiplexer zur Minimierung der ICI durchgeführt. Dadurch erfährt das Signal starke ISI. Eine Reed-Solomon-Codierung wird dabei zur Fehlerkorrektur verwendet. Die Decodierung findet für jeden Kanal separat statt. Sowohl ein Schwellwertentscheider als auch ein Maximum-Likelihood-Sequenz-Detektor (MLSD) werden als alternative Empfänger verwendet. Der Kanalabstand $f_B$ beträgt $f_B$=62GHz, um die Selbe spektrale Effizienz wie bei dem in Fig. 2(A) dargestellten Kanalraster zu erhalten.

Die Nettobitrate beträgt in allen verglichenen Systemen 40Gbit/s. Für die herkömmlichen Vergleichssysteme mit Reed-Solomon-Codierung werden zwei Fälle betrachtet. Zum einen die in heutigen Systemen üblicherweise verwendete Variante RS (255,239,8), bei der 239 Informationssymbole, die jeweils aus 8 Bit bestehen, um 16 Codesymbole erweitert werden, so dass das RS Codewort 255 Symbole umfasst. Zum anderen ein stärkerer Code RS (255,191,8). Bei diesem Code ist die Coderate vergleichbar mit der der erfindungsgemäßen Interkanal-Zeit-Codierung.

Insgesamt werden die nachfolgenden Übertragungssysteme verglichen:

A[1]    erfindungsgemäße Interkanal-Zeit-Codierung,
A2    erfindungsgemäße Interkanal-Zeit-Codierung mit kombinierter Reed-Solomon-Codierung,
B1    konventionelles System, uncodiert,
B2    konventionelles System, Reed-Solomon-Codierung RS (255,239,8), sowie
B3    konventionelles System, Reed-Solomon-Codierung RS (255,191,8).

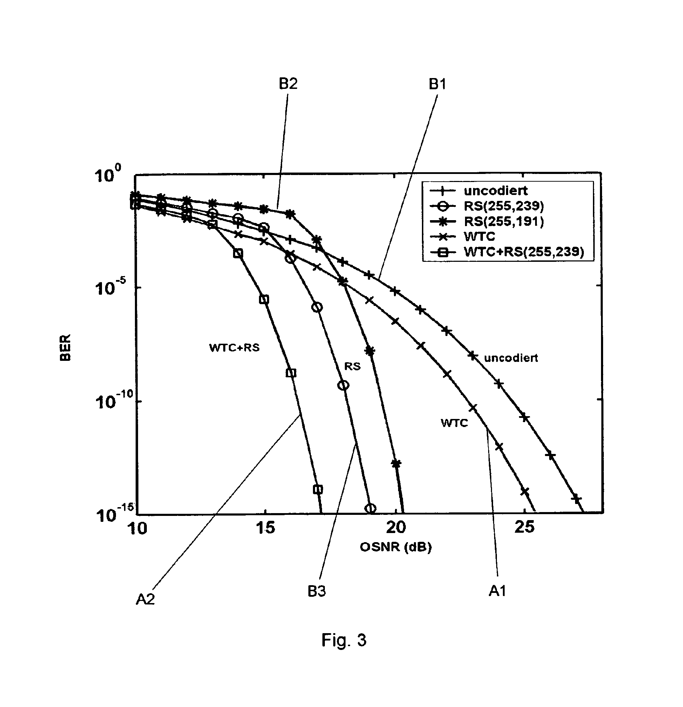

In Fig. 3 ist die BER nach der Decodierung auf der Empfängerseite für die fünf verglichenen Übertragungssysteme dargestellt. Für kleine OSNR erzielen die Systeme A1, A2 mit erfindungsgemäßen Codierverfahren geringere BER als die Vergleichsysteme B1, B2, B3.

Da ein Reed-Solomon-Decodierer eine Eingangs-BER von etwa $10^{-2}$ bis $10^{-3}$ benötigt, um Bitfehler korrigieren zu können, kann ein nochmals verbessertes Übertragungsverhalten erreicht werden, indem die erfindungsgemäße Interkanal-Zeit-Codierung A1 mit einer Reed-Solomon-Codierung zum Übertragungssystem A2 kombiniert wird. Dabei sorgt die erfindungsgemäße Interkanal-Zeit-Codierung für die nötige geringe Fehlerrate am Eingang des Reed-Solomon-Decodierers, der nun den hohen Codiergewinn ausnutzen kann. Verglichen mit der konventionellen Reed-Solomon-Codierung RS (255,239,8) (B2) sowie RS (255,191,8) (B3) erzielt das erfindungsgemäße, kombinierte Übertragungssystem A2 einen Codiergewinn von etwa 2dB gegenüber B2 und von etwa 3dB gegenüber B3.

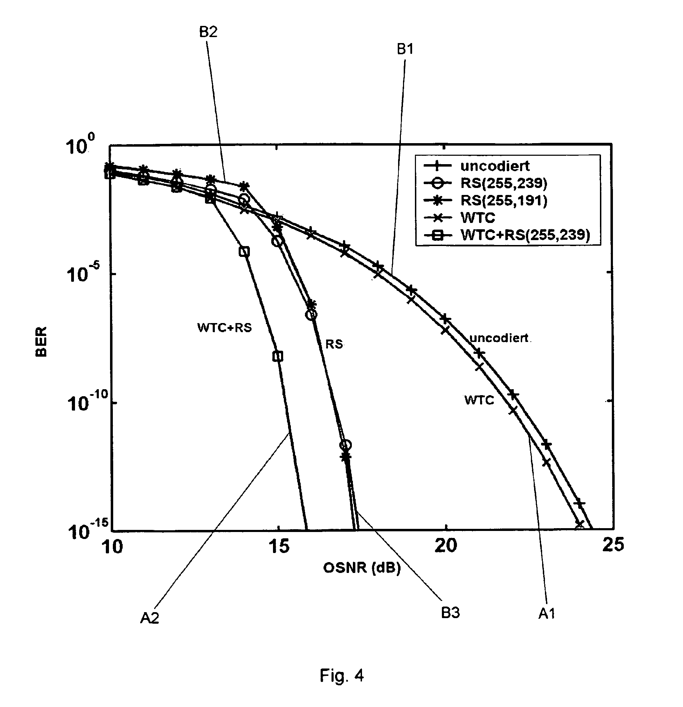

In Fig. 4 sind die selben Systeme für den Fall miteinander verglichen, dass die ISI bei der Decodierung berücksichtigt wird. Im Fall der Interkanal-Zeit-Codierung kann dies durch Verwendung von Gleichung (4) erreicht werden, für ein herkömmliches Übertragungssystem mit konventioneller Reed-Solomon-Codierung kann dies durch Verwendung eines MLSD erreicht werden. Auch bei diesem Vergleich kann Fig. 4 entnommen werden, dass das kombinierte System mit Interkanal-Zeit-Codierung und Reed-Solomon-Codierung mit einem Codiergewinn von etwa 2dB am besten abschneidet.

Ein optisches Übertragungssystem mit erfindungsgemäßer Interkanal-Zeit-Codierung weist somit bei kleinem OSNR geringere BER auf, als vergleichbare herkömmliche Übertragungssysteme mit konventioneller Codierung.

Ein mehrkanaliges optisches Übertragungssystem mit erfindungsgemäßer Interkanal-Zeit-Codierung und kombinierter Reed-Solomon-Codierung weist bei großem OSNR eine wesentlich geringere BER auf, als vergleichbare herkömmliche Übertragungssysteme mit konventioneller Codierung.

Die erfindungsgemäße Interkanal-Zeit-Codierung, insbesondere in Kombination mit einer Reed-Solomon-Codierung, verringert die BER beim Empfänger signifikant. Dadurch sinkt die OSNR die nötig ist, um eine vorgegebene BER zu erreichen. Dadurch kann die durch ein optisches Übertragungssystem überbrückbare Streckenlänge erhöht werden, wodurch die Systemkosten sinken. Gleichzeitig sinkt die Empfindlichkeit gegenüber leistungsabhängigen Nichtlinearitäten der Faserstrecke und gegenüber Rauschen der optischen Verstärker.

Darüber hinaus ermöglicht die erfindungsgemäße Interkanal-Zeit-Codierung engere Kanalabstände und damit eine höhere spektrale Effizienz. Die Gesamtkosten eines optischen Übertraggungssystems sinken beim Einsatz der erfindungsgemäßen Interkanal-Zeit-Codierung, da die Sendefilter entfallen können und der Decoder zusätzlich als Entzerrer fungiert. In einem herkömmlichen System mit konventioneller Reed-Solomon-Codierung muss hierfür ein MLSD eingesetzt werden. Da die Codierung und Decodierung blockweise durchgeführt wird, können mehrere Codierer und Decodierer parallel eingesetzt werden, wodurch die Anforderungen an die Hardware gesenkt und somit die Systemkosten verringert werden. Dies ist bei Einsatz eines MLSD nicht möglich.

Die erfindungsgemäße Interkanal-Zeit-Codierung erlaubt zudem die gemeinsame Detektion mehrerer miteinander codierter Kanäle, wodurch Störungen, die einzelne Kanäle betreffen, einen geringeren Störeinfluss haben. Bei der erfindungsgemäßen Interkanal-Zeit-Codierung verarbeitet ein Decodierer gleichzeitig beispielsweise die Signale zweier (Paarweise codiert) oder dreier (zu Tripeln codiert) Kanäle gemeinsam. Wenn beispielsweise einer der beiden Kanäle eine starke Störung erfährt, der andere jedoch nicht, steigt die Wahrscheinlichkeit, dass die Decodierung trotzdem korrekt arbeitet.

Außerdem kann durch die Wahl des Codewortraums die Stärke der ICI beeinflusst werden. Darüber hinaus kann beim erfindungsgemäßen Codierverfahren die auftretende ICI nutzbringend für für den Detektionsprozess verwendet werden. Im Falle einer Einzelkanal-Detektion wäre die ICI ein Störfaktor. Die Detektion findet auf Symbolbasis statt und kann deshalb parallelisiert werden. Dadurch können durch die Verwendung mehrerer parallel arbeitender Decodierer die Geschwindigkeitsanforderungen an diese verringert werden. Der Decodierer umfasst beim erfindungsgemäßen Codierverfahren sowohl die Funktionalität einer Fehlerkorrektur, als auch eines Entzerrers. Dadurch ist nur noch eine Baugruppe nötig, um beide Aufgaben zu erfüllen. Zusätzlich werden im Multiplexer keine Sendefilter mehr benötigt, wodurch die Systemkosten weiter verringert werden können.

Es ist besonders wichtig hervorzuheben, dass eine Anwendung des erfindungsgemäßen Codierverfahrens nicht nur auf mehrkanalige optische Übertragungssysteme beschränkt ist. Es ist ebenso denkbar das erfindungsgemäße Codierverfahren in Verbindung mit digitalen Funkübertragungssystemen, beispielsweise für mobile Kommunikation anzuwenden, oder in Verbindung mit drahtlosen oder kabelgebundenen Computernetzwerken, oder zur Datenübertragung zwischen Satelliten, Raumsonden und dergleichen und deren Bodenstationen, oder im Bereich von terrestrisch verlegten Kabelnetzwerken zur Übertragung von Telekommunikationsdienstleistungen und dergleichen.

Gewerbliche Anwendbarkeit:

Die Erfindung ist insbesondere im Bereich der digitalen Datenübertragung, sowie der Herstellung und dem Betrieb von Netzwerken zur digitalen Datenübertragung gewerblich anwendbar.

**Patentansprüche**

1. Codierverfahren für mehrkanalige, optische Übertragungssysteme (10), bei dem eine Mehrzahl von Datensignalen ($a_k$) über Wellenlängenmultiplexkanäle übertragen wird und eine Codierung der Datensignale ($a_k$) sowohl in Zeitrichtung, als auch über mehrere Kanäle hinweg erfolgt,
**dadurch gekennzeichnet,**
**dass** für die Codierung ein Mapping gewählt wird, bei dem jedem zu übertragenden Bitmuster ein bestimmtes kodiertes Bitmuster zugewiesen wird und bei dem das gleichzeitige Auftreten von Bits mit einem Signalwert von '1' in benachbarten miteinander codierten Kanälen ausgeschlossen wird.

2. Codierverfahren nach Anspruch 1, **gekennzeichnet durch** ein Codedesign mit einer maximalen Hamming-Distanz.

3. Codierverfahren nach Anspruch 1 oder 2, **gekennzeichnet durch** ein Codedesign mit minimalen Hamming-Gewichten.

4. Codierverfahren nach Anspruch 1, 2 oder 3, **gekennzeichnet durch** ein Codedesign mit einer minimalen Anzahl von '0 1' und '1 0' Bitmustern in Zeitrichtung.

5. Codierverfahren nach einem der vorhergehenden Ansprüche, **dadurch gekennzeichnet,**
**dass** bei der Decodierung alle möglichen Codewörter ausgewertet werden und das Codewort mit der maximalen Metrik ausgewählt wird.

6. Codierverfahren nach einem der vorhergehenden Ansprüche, **dadurch gekennzeichnet,**
**dass** mittels eines Algorithmus die unwahrscheinlichsten Codewörter vor der eigentlichen Decodierung ausgeschlossen werden.

7. Codierverfahren nach einem der vorhergehenden Ansprüche, **dadurch gekennzeichnet, dass** die Kanäle zu Paaren gruppiert werden, wobei die Codierung über die zu Paaren gruppierten Kanäle hinweg erfolgt.

8. Codierverfahren nach einem der Ansprüche 1 bis 6, **dadurch gekennzeichnet, dass** die Kanäle zu Tripeln gruppiert werden, wobei die Codierung über die zu Tripeln gruppierten Kanäle hinweg erfolgt.

9. Codierverfahren nach einem der vorhergehenden Ansprüche, **dadurch gekennzeichnet, dass** die Interkanal-Zeit-Codierung mit einer Reed-Solomon Codierung kombiniert wird.

10. Codierer (12) umfassend Mittel zur Interkanal-Zeit-Codierung einer Mehrzahl von Sendefolgen ($a_k$) zur Übertragung über Wellenlängenmultiplexkanäle,
**dadurch gekennzeichnet,**
**dass** die Mittel zur Interkanal-Zeit-Codierung zur Übertragung über die Wellenlängenmultiplexkanäle Mittel zur Durchführung eines Mappings umfassen, bei dem jedem zu übertragenden Bitmuster ein bestimmtes kodiertes Bitmuster zugewiesen wird und bei dem das gleichzeitige Auftreten von Bits mit einem Signalwert von '1' in benachbarten miteinander codierten Kanälen ausgeschlossen wird.

11. Mehrkanaliges optisches Übertragungssystem (10) zur Durchführung des Codierverfahrens nach einem der Ansprüche bis 9, **umfassend** auf der Senderseite (14) einen codierer nach Anspruch 10 zur Interkanal-Zeit-Codierung mehrerer, mittels einer optischen Faserstrecke (11) über Wellenlängenmultiplexkanäle übertragbarer Datensignale ($a_k$) und auf der Empfängerseite (17) angeordnete Mittel (16) zur Decodierung der über die optische Faserstrecke (11) über die Wellenlängenmultiplexkanäle übertragenen Datensignale ($a_k$).

12. Mehrkanaliges optisches Übertragungssystem nach Anspruch 11, **dadurch gekennzeichnet, dass** zur Decodierung ein Maximum-Likelihood Symbol-by-Symbol Decoder verwendet wird.

13. Mehrkanaliges optisches Übertragungssystem nach Anspruch 11, **dadurch gekennzeichnet, dass** für die Decodierung ein Sphere-Decoder verwendet wird.

14. Mehrkanaliges optisches Übertragungssystem nach Anspruch 11,
**gekennzeichnet durch** Mittel (12) zur zusätzlichen Durchführung einer Reed-Solomon-Codierung.

**Claims**

1. A coding method for multichannel, optical transmission systems (10), in which a plurality of data signals ($a_k$) are transmitted via wavelength multiplex channels and a coding of the data signals ($a_k$) takes place both in the direction of time as well as via several channels, **characterized In that**
a mapping is selected for the coding in which each bit pattern to be transmitted is assigned a specified coded bit pattern and in which case the simultaneous occurrence of bits with a signal value of '1' in adjacent channels coded with each other is excluded.

2. The coding method according to Claim 1, **characterized by** a code design with a maximum hamming distance.

3. The coding method according to Claim 1 or 2, **characterized by** a code design with minimum hamming weights.

4. The coding method according to Claim 1, 2 or 3, **characterized by** a code design with a minimum number of '0 1' and '1 0' bit patterns in the direction of time.

5. The coding method according to any one of the preceding claims, **characterized in that**
in the case of the decoding all possible codewords are evaluated and that the code word is selected with the maximum metrics.

6. The coding method according to any one of the preceding claims, **characterized in that**
the most improbable code words are excluded by means of an algorithm prior to the actual decoding.

**7.** The coding method according to any one of the preceding claims, **characterized in that** the channels are grouped into pairs wherein the coding takes place over the channels grouped into pairs.

**8.** The coding method according to any one of Claims 1 through 6, **characterized in that** the channels are grouped into triples, wherein the coding takes place over the channels grouped into triples.

**9.** The coding method according to any one of the preceding claims, **characterized in that** the interchannel time coding is combined with Reed Solomon coding.

**10.** Encoder (12) comprising means for interchannel time coding of a plurality of transmission sequences ($a_k$) for transmission via wave-length multiplex channels, **characterized in that** the means for interchannel time coding for transmission via the wavelength multiplex channels comprises means for the carrying out of a mapping, in which case each of the bit patterns to be transmitted is assigned a specified coded bit pattern and that in the case of the simultaneous occurrence of bits with a signal value of '1' in adjacent channels coded with each other is excluded.

**11.** A multichannel optical transmission system (10) for the carrying out of the coding method according to any one of Claims 1 through 9, comprising an encoder according to Claim 10 arranged on the transmitter side (14) for interchannel time coding of several data signals ($a_k$) transmittable by means of an optical fiber transmission link (11) via wavelength multiplex channels and means (16) arranged on the receiver side (17) for decoding of the data signals ($a_k$) transmitted via the wavelength multiplex channels.

**12.** The multichannel optical transmission system according to Claim 11, **characterized In that** a maximum likelihood symbol by symbol decoder is used for the decoding.

**13.** The mulichannel optical transmission system according to Claim 11, **characterized in that** a sphere decoder is used for the decoding.

**14.** The multichannel optical transmission system according to Claim 11, **characterized by** means for the additional carrying out of Reed Solomon coding.

## Revendications

**1.** Procédé de codage pour systèmes de transmission optique (10) à plusieurs canaux avec lequel une pluralité de signaux de données ($a_k$) est transmise sur des canaux de multiplexage par répartition en longueur d'onde et un codage des signaux de données ($a_k$) est effectué à la fois dans le sens du temps et sur plusieurs canaux, **caractérisé en ce que** le codage est effectué en utilisant un mappage avec lequel un modèle binaire à codage donné est associé à chaque modèle binaire à transmettre et avec lequel l'apparition simultanée de bits dont le signal correspond à la valeur « 1 » dans des canaux voisins corrélés entre eux est exclue.

**2.** Procédé de codage selon la revendication 1, **caractérisé par** un code conçu avec une distance de Hamming maximale.

**3.** Procédé de codage selon la revendication 1 ou 2, **caractérisé par** un code conçu avec des poids de Hamming minimums.

**4.** Procédé de codage selon la revendication 1, 2 ou 3, **caractérisé par** un code conçu avec un nombre minimum de modèles binaires « 0 1 » et « 1 0 » dans le sens du temps.

**5.** Procédé de codage selon l'une des revendications précédentes, **caractérisé en ce que** lors du décodage, tous les mots de code possibles sont analysés et le mot de code ayant la valeur maximale est sélectionné.

**6.** Procédé de codage selon l'une des revendications précédentes, **caractérisé en ce que** les mots de code les plus improbables sont exclus au moyen d'un algorithme avant le décodage proprement dit.

**7.** Procédé de codage selon l'une des revendications précédentes, **caractérisé en ce que** les canaux sont groupés par paires, le codage s'effectuant au-dessus des canaux à grouper par paires.

**8.** Procédé de codage selon l'une des revendications 1 à 6, **caractérisé en ce que** les canaux sont groupés en triplets, le codage s'effectuant au-dessus des canaux à grouper par triplets.

**9.** Procédé de codage selon l'une des revendications précédentes, **caractérisé en ce que** le codage du temps intercanal est combiné avec un codage de Reed-Solomon.

**10.** Codeur (12) comprenant des moyens pour le codage du temps intercanal d'une pluralité de séries émises ($a_k$) en vue de la transmission sur des canaux de multiplexage par répartition en longueur d'onde, **caractérisé en ce que** les moyens pour le codage du temps intercanal comprennent, pour la transmission sur les canaux de multiplexage par répartition en longueur d'onde, des moyens pour réaliser un mappage avec lequel un modèle binaire à codage donné est associé à chaque modèle binaire à transmettre et avec lequel l'apparition simultanée de bits dont le signal correspond à la valeur « 1 » dans des canaux voisins corrélés entre eux est exclue.

**11.** Système de transmission optique (10) à plusieurs canaux destiné à mettre en oeuvre le procédé de codage selon l'une des revendications 1 à 9, comprenant du côté émetteur (14) un codeur selon la revendication 10 pour le codage du temps intercanal d'une pluralité de signaux de données ($a_k$) pouvant être transmise sur des canaux de multiplexage par répartition en longueur d'onde au moyen d'une section à fibres optiques (11) et des moyes (16) disposés du côté récepteur (17) pour décoder les signaux de données ($a_k$) transmis par le biais de la section à fibres optiques (11) sur les canaux de multiplexage par répartition en longueur d'onde.

**12.** Système de transmission optique à plusieurs canaux selon la revendication 11, **caractérisé en ce qu'**un décodeur symbole par symbole à probabilité maximale est utilisé pour le décodage.

**13.** Système de transmission optique à plusieurs canaux selon la revendication 11, **caractérisé en ce qu'**un décodeur par sphère est utilisé pour le décodage.

**14.** Système de transmission optique à plusieurs canaux selon la revendication 11, **caractérisé par** des moyens (12) destinés à réaliser en plus un codage Reed-Solomon.

Fig. 1

Fig. 2

Fig. 3

Fig. 4

**EP 1 806 863 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6313932 B1
- US 6522436 B2
- US 5710797 A